# FASCICULE DE BREVET EUROPEEN

(11) **EP 3 647 715 B1**
(45) Date de publication et mention de la délivrance du brevet: **17.04.2024**
(21) Numéro de dépôt: 19206910.2
(22) Date de dépôt: 04.11.2019
(51) Int. Cl.: G01B 11/24, G01N 21/88, H05B 45/20, H05B 47/105, G03B 15/02, H04N 23/56, H04N 23/66, H04N 23/74

(54) **PROCEDE DE PARAMETRAGE D'UN DISPOSITIF DE VISION INDUSTRIELLE**
VERFAHREN ZUR PARAMETRISIERUNG EINES MASCHINENSICHTGERÄTES
METHOD FOR PARAMETERIZING A MACHINE VISION DEVICE

(30) Priorité: 05.11.2018 FR 1860162
(43) Date de publication de la demande: 06.05.2020
(73) Titulaire: TPL Vision UK Ltd, CHARING (KENT) TN27 0JW (GB)
(72) Inventeur: MAZEAUD, Guillaume, GLENCARSE, PH2 7LF (GB); MCKINLEY, Jack, EDINBURGH, EH4 3SZ (GB); GATEV, Nedko, DUNDEE, DD4 6NS (GB)
(74) Mandataire: Cabinet Nony

(56) Documents cités:
- WO-A1-2018/065265
- US-B1- 6 788 411
- TPL Vision: "OT Projector Technology", , 2 juillet 2018 (2018-07-02), pages 1-6, XP054979639, Extrait de l'Internet: URL:https://www.youtube.com/watch?v=njEq0D 8Oms0 [extrait le 2019-08-30]

## Description

### Domaine technique

La présente invention se rapporte à un procédé de paramétrage d'un dispositif de vision industrielle.

### État de la technique

Dans le domaine industriel, il est connu de contrôler visuellement des objets pour les identifier ou en vérifier la conformité.

La vidéo intitulée « OT Projector Technology » https://www.youtube.com/watch?v=njEq0D8Oms0 en est une illustration.

Ce contrôle est avantageusement réalisé de manière automatisée au moyen d'un dispositif de vision industrielle. Un tel dispositif de vision industrielle comporte classiquement des sources lumineuses éclairant une zone d'intérêt contenant les objets à contrôler, et une caméra pour prendre des images de cette zone d'intérêt. Les images sont ensuite traitées par un logiciel d'analyse d'images, intégré ou non à la caméra.

La qualité du contraste, et donc la robustesse du contrôle, dépendent de la configuration d'éclairage. L'éclairage peut être par exemple directif, indirect diffus, coaxial, avec une incidence par rapport à l'axe de la caméra, rasant, et encore en ombre chinoise. La couleur de l'éclairage doit être adaptée aux objets. Par exemple, il peut être nécessaire d'éclairer en rouge des objets rouges défilant sur un tapis de convoyage bleu, les objets apparaissant ainsi blancs sur un fond noir pour une caméra monochrome.

Enfin, classiquement, les sources lumineuses n'éclairent pas en continu, mais de manière intermittente, à la façon d'un stroboscope. Les sources lumineuses émettent ainsi des flashs successifs d'une durée égale ou légèrement supérieure au temps d'exposition de la caméra. Ceci permet de « figer » les objets en mouvement sur le tapis de convoyage lors de l'acquisition des images par la caméra. Ceci permet en outre d'accroître la durée de vie potentielle des sources lumineuses, notamment quand celles-ci sont des Diodes Electro Luminescentes (DEL).

L'allumage et l'extinction des sources lumineuses sont généralement réalisés à l'aide de sorties tout-ou-rien (TOR) de la caméra ou d'un PLC (pour l'anglais « *Programmable Logic Controler* », ou Automate Programmable Intelligent API), voire *via* des bus de terrain pour les éclairages équipés d'interface *ad hoc,* tels qu'Ethernet, RS485, RS232, DeviceNet, Profibus ou autres. Ces interfaces sont cependant rares du fait d'un coût élevé et de la complexité de la programmation associée, en particulier pour commander plusieurs sources lumineuses, en séquences coordonnées, selon des couleurs différentes et/ou des intensités lumineuses différentes. Les bus de terrain sont une solution, mais ils présentent une réactivité limitée qui peut nuire à la précision des séquences d'allumages commandés.

Par ailleurs, il existe des systèmes de caméra constitués d'une caméra disposant d'un éclairage à DEL intégré. Le pilotage des DELs est réalisé directement depuis le programme de configuration et d'analyse d'images intégré à la caméra, simplifiant ainsi les problèmes de connectivité et de pilotage. Cependant l'éclairage intégré ne permet qu'un éclairage directif et monochrome, ce qui limite les possibilités de définir une configuration d'éclairage optimale dans une situation déterminée.

US 6 788 411 décrit un dispositif de vision industrielle comportant un module d'analyse capable d'adapter l'éclairage par analyse d'images Il ne décrit pas des sources lumineuses asservies en fonction de signaux lumineux d'origine, mais un réglage de sources lumineuses pour optimiser une qualité d'image.

Pour répondre à ces problèmes, PCT/EP2017/074423 décrit un dispositif de vision industrielle comportant :
- un système de caméra comportant une caméra et au moins une source lumineuse d'origine ; et
- un dispositif d'éclairage comportant
   - une interface de commande comportant :
      - une pluralité de capteurs de lumière pour capter chacun un signal lumineux d'origine respectif émis par ladite source lumineuse d'origine et émettre un signal de capteur respectif en réponse à la capture dudit signal lumineux d'origine respectif ;
      - une unité électronique de traitement dudit signal de capteur respectif configurée de manière à émettre, en conséquence dudit traitement, un signal de commande respectif à au moins une sortie respective de l'unité électronique de traitement, et
   - une ou plusieurs sources lumineuses asservies, chacune reliée à une sortie respective de l'unité électronique de traitement par des moyens de connexion respectifs, de manière à être commandée avec le signal de commande délivré à ladite sortie.

Ainsi, l'interface de commande permet de commander un éclairage externe à l'aide de signaux lumineux d'origine émis par les sources lumineuses d'origine, ce qui est particulièrement avantageux lorsque les sources lumineuses d'origine ne sont pas adaptées pour garantir un contraste optimal pour le traitement de l'image. L'interface de commande est simple à réaliser et présente un encombrement réduit. Elle évite les câblages compliqués, les connexions réseau et les programmes d'interface.

PCT/EP2017/074423 décrit aussi un procédé de commande d'un éclairage dudit dispositif du vision industrielle. Ce procédé comprend les étapes consistant à :
i) émettre des signaux lumineux d'origine ;
ii) capter les signaux lumineux d'origine émis depuis différentes positions d'origine ;
iii) traiter les signaux lumineux d'origine captés pour en déduire leurs positions d'origine et une commande d'une ou plusieurs sources lumineuses asservies ;
iv) commander une ou plusieurs sources lumineuses asservies conformément à la commande déduite à l'étape iii).

Le traitement à l'étape iii) est réalisé dans l'unité électronique de traitement, programmée à cet effet. La programmation de l'unité électronique de traitement pour que l'éclairage par les sources lumineuses asservies soit satisfaisant est cependant spécifique à chaque application. En particulier, elle dépend de la zone d'intérêt à éclairer, ce qui limite la polyvalence de l'interface de commande. Par ailleurs, cette programmation nécessite une formation spécifique de l'opérateur.

Il existe donc un besoin pour une interface de commande, un dispositif d'éclairage et un dispositif de vision industrielle du type de ceux décrits dans PCT/EP2017/074423, dans lesquels l'unité électronique de commande soit plus facile à programmer, et en particulier puisse être programmée sans formation particulière.

Un but de l'invention est de répondre à ce besoin.

### Résumé de l'invention

L'invention propose un procédé de paramétrage d'un dispositif de vision industrielle, ledit dispositif comportant :
- un système de caméra comportant une caméra et des première et deuxième sources lumineuses d'origine configurées pour, dans une configuration d'éclairage d'origine, émettre des premier et deuxième signaux lumineux d'origine respectivement ;
- un dispositif d'éclairage comportant :
   - une interface de commande comportant :
      - des premier et deuxième capteurs de lumière agencés pour capter lesdits premier et deuxième signaux lumineux d'origine, respectivement, et émettre des premier et deuxième signaux de capteur, respectivement, en réponse à la capture desdits premier et deuxième signaux lumineux d'origine, respectivement ;
      - une unité électronique de traitement desdits premier et deuxième signaux de capteur configurée de manière à émettre, en conséquence dudit traitement, une pluralité de signaux de commande à des sorties respectives de l'unité électronique de traitement ;
   - une pluralité de sources lumineuses asservies, chacune connectée à une sortie respective de l'unité électronique de traitement de manière à être commandée avec le signal de commande délivré à ladite sortie pour éclairer une zone d' intérêt.

Ledit procédé comporte les étapes successives suivantes :
a) sélection, en fonction de la zone d'intérêt, d'une configuration d'éclairage pour les sources lumineuses asservies, dite « configuration d'éclairage asservie », et enregistrement de la configuration d'éclairage asservie dans l'interface de commande et/ou application de la configuration d'éclairage asservie ;
b) indépendamment de l'étape a), sélection d'une configuration d'éclairage pour les sources lumineuses d'origine, ou « configuration d'éclairage d'origine », et application de la configuration d'éclairage d'origine ;
c) établissement d'une relation informatique entre lesdites configurations d'éclairage d'origine et asservie et enregistrement de ladite relation informatique dans l'interface de commande de manière que l'unité électronique commande un éclairage de la zone d'intérêt selon la configuration d'éclairage asservie en réponse à la réception, par lesdits capteurs, de signaux lumineux d'origine selon la configuration d'éclairage d'origine.

Comme on le verra plus en détail dans la suite de la description, l'opérateur recherche donc une configuration d'éclairage asservie adaptée à la zone d'intérêt en testant différentes configurations. A l'issue de cette recherche, l'interface de commande commande donc les sources lumineuses asservies suivant la configuration d'éclairage asservie que l'opérateur a retenue. Un premier ordinateur peut remplacer l'opérateur dans cette recherche.

Par ailleurs, l'opérateur sélectionne une configuration d'éclairage d'origine quelconque et l'applique. Un deuxième ordinateur, identique ou différent du premier ordinateur, peut remplacer l'opérateur dans ces opérations.

L'interface de commande reçoit alors les signaux lumineux d'origine correspondant à la configuration d'éclairage d'origine sélectionnée.

Il suffit alors à l'opérateur de commander l'unité de traitement pour qu'elle établisse et enregistre une relation informatique entre les configurations d'éclairage d'origine et asservie, par exemple par un simple appui sur un bouton.

Dans le mode de réalisation préféré, l'opérateur maintient simultanément actives les sources lumineuses asservies dans la configuration d'éclairage asservie et les sources lumineuses d'origine dans la configuration d'éclairage d'origine et, de préférence, par l'appui sur un bouton, ordonne à l'unité de traitement d'établir et d'enregistrer la relation informatique entre ces configurations.

Un procédé selon l'invention permet ainsi une programmation simple et très rapide de l'interface de commande.

La relation informatique permet ensuite à l'interface de commande de commander les sources lumineuses asservies suivant la configuration d'éclairage asservie à chaque fois qu'elle reçoit des signaux lumineux d'origine selon la configuration d'éclairage d'origine. Autrement dit, à chaque fois que ladite configuration d'éclairage d'origine est appliquée par la caméra, l'interface de commande commande ladite configuration d'éclairage asservie.

L'opérateur peut en particulier, pour chacune d'une pluralité de configurations d'éclairage d'origine, de préférence pour un nombre prédéterminé de configurations d'éclairage d'origine, par exemple moins de 100 de configurations d'éclairage d'origine, associer une configuration d'éclairage asservie correspondante. L'étape c) permet ainsi d'enregistrer dans l'interface de commande un ensemble d'enregistrements « configuration d'éclairage d'origine - configuration d'éclairage asservie correspondante ». La sélection d'une configuration d'éclairage d'origine permet ensuite d'obtenir, très facilement, la configuration d'éclairage asservie correspondante.

De préférence, à chaque configuration d'éclairage d'origine correspond une unique configuration d'éclairage asservie. De préférence, à chaque configuration d'éclairage asservie correspond une unique configuration d'éclairage d'origine.

La relation informatique entre une configuration d'éclairage d'origine et la configuration d'éclairage asservie correspondante est de préférence arbitraire. Par exemple, elle ne résulte que d'une décision de l'opérateur.

Par ailleurs, hormis ladite relation informatique, il n'existe pas de lien entre la configuration d'éclairage d'origine et la configuration d'éclairage asservie. Il est donc possible d'obtenir un éclairage asservi complexe à partir d'un système de caméra ne pouvant être configuré que selon une ou plusieurs configurations d'éclairage d'origine rudimentaire.

Un procédé selon l'invention comporte les caractéristiques suivantes:
- l'étape a), on teste une pluralité de configurations d'éclairage asservies, de manière à trouver et sélectionner une configuration d'éclairage asservie optimale pour l'efficacité d'une reconnaissance, par le dispositif de vision industrielle, d'objets disposés dans la zone d'intérêt ;
- dans une position assemblée dans laquelle la caméra est fixée sur l'interface de commande, les sources lumineuses d'origine font face à un ou plusieurs capteurs de lumière respectifs et sont à moins de 3 cm desdits capteurs de lumière respectifs.

Un procédé selon l'invention peut encore comporter une ou plusieurs des caractéristiques optionnelles suivantes :
- à l'étape c), on enregistre ladite relation informatique entre les configurations d'éclairage d'origine et asservie par action sur un organe de programmation de l'interface de commande, de préférence un bouton ou un écran, de préférence un bouton ;
- à l'étape b), la sélection de la configuration d'éclairage d'origine peut être arbitraire ;
- chaque capteur de lumière est disposé de manière que la lumière qu'il reçoit provienne, pour plus de 50 % de son intensité, d'une ou plusieurs sources lumineuses d'origine qui lui font face ;
- on maintient actives les sources lumineuses asservies, selon la configuration d'éclairage asservie sélectionnée à l'étape a), pendant l'application de la configuration d'éclairage d'origine à l'étape b) et/ou jusqu'à avoir établi ladite relation informatique à l'étape c) ;
- à l'étape a), on sélectionne la configuration d'éclairage asservie dans une base de configurations d'éclairage asservies stockée dans l'interface de commande ;
- la base de configurations d'éclairage asservies, de préférence stockée dans l'interface de commande, comporte plus de 1, plus de 3, plus de 7, de préférence plus de 15 configurations d'éclairage asservies et/ou moins de 1000, moins de 500, moins de 100 configurations d'éclairage asservies ;
- les sources lumineuses d'origine sont réglables par un opérateur de manière indépendante et, à l'étape a), pour sélectionner la configuration d'éclairage asservie, un opérateur règle au moins une source lumineuse d'origine indépendamment des autres sources lumineuses d'origine ;
- à l'étape b), on sélectionne la configuration d'éclairage d'origine dans une base de configurations d'éclairage d'origine stockée dans la caméra ;
- la base de configurations d'éclairage d'origine, de préférence stockée dans la caméra, comporte plus de 1, plus de 3, plus de 7, de préférence plus de 15 configurations d'éclairage d'origine et/ou moins de 1000, moins de 500, moins de 100 configurations d'éclairage d'origine ;
- à l'étape c), on enregistre ladite relation entre les configurations d'éclairage d'origine et asservie appliquées par action sur un organe de programmation de l'interface de commande, de préférence un bouton ou un écran, de préférence un bouton ;
- lesdites sources lumineuses d'origine sont intégrées dans la caméra ;
- la caméra est fixée, de préférence de manière amovible, de préférence magnétiquement, sur l'interface de commande dans une position prédéterminée, de préférence par l'intermédiaire d'un support de fixation ;
- le cycle des étapes a) à c) est renouvelé pour établir plusieurs dites relations informatiques adaptées à la reconnaissance, par le dispositif de vision industrielle, de plusieurs objets différents ;
- la ou les sources lumineuses asservies sont configurées pour émettre des flashs d'une durée inférieure à 10 ms et/ou un spectre lumineux d'une largeur inférieure à 100 nm, et/ou au moins une partie des sources lumineuses asservies sont configurées pour émettre dans un domaine de fréquences non visibles ;
- l'interface de commande est traversée par une ouverture et l'axe optique de la caméra est sensiblement aligné avec l'axe de l'ouverture, les sources lumineuses asservies étant disposées du côté de l'interface de commande opposé à la caméra.

Un exemple non-revendiqué en soi concerne une interface de commande comportant un organe de programmation, de préférence un bouton, dont un actionnement établit une relation informatique entre une configuration d'éclairage d'origine appliquée par les sources lumineuses d'origine et une configuration d'éclairage asservie appliquée par les sources lumineuses asservies commandées par l'interface de commande.

Une interface de commande peut encore comporter une ou plusieurs des caractéristiques optionnelles suivantes :
- de préférence, la pluralité de sources lumineuses asservies est intégrée à l'interface de commande ;
- de préférence, l'interface de commande comporte une attache de fixation de la caméra dans une position prédéterminée dans laquelle chaque capteur de lumière capte zéro, un ou plusieurs signaux lumineux d'origine, en fonction de sa position, de préférence capte au moins un signal lumineux d'origine, de préférence un unique signal lumineux d'origine, un signal lumineux d'origine pouvant atteindre plusieurs capteurs ;
- de préférence, l'interface de commande comporte une attache de fixation de la caméra dans une position prédéterminée dans laquelle chaque signal lumineux d'origine n'atteint qu'au plus un seul capteur ;
- de préférence, l'attache de fixation est désactivable. De préférence, elle est magnétique.

Un exemple non-revendiqué en soi concerne aussi un kit de commande comportant une interface de commande et un support de fixation d'une caméra, lui-même pourvu d'une attache de fixation à l'interface de commande. De préférence, cette attache de fixation est désactivable. De préférence, elle est magnétique.

Un exemple non-revendiqué en soi concerne aussi un dispositif d'éclairage comportant :
- une interface de commande ou un kit de commande ;
- une pluralité de sources lumineuses asservies commandées par l'interface de commande de manière à éclairer une zone d'intérêt dans une configuration d'éclairage asservie.

Un exemple non-revendiqué en soi concerne encore un dispositif de vision industrielle comportant :
- un dispositif d'éclairage et
- un système de caméra comportant une caméra et une pluralité de sources lumineuses d'origine configurées pour, dans une configuration d'éclairage d'origine, émettre chacune un signal lumineux d'origine respectif.

De préférence, la pluralité de sources lumineuses d'origine est intégrée à la caméra.

De préférence, la caméra est une caméra industrielle et comporte plus de 1, de préférence plus de 2, de préférence plus de 3 sources lumineuses d'origine indépendantes, c'est-à-dire pouvant être commandées indépendamment les unes des autres.

De préférence, la caméra comporte une interface de caméra adaptée pour qu'un opérateur puisse définir et appliquer, et de préférence enregistrer dans une mémoire de la caméra, une, de préférence plusieurs configurations d'éclairage d'origine.

De préférence, un signal lumineux d'origine est capté par un ensemble de capteur(s) constitué d'un ou plusieurs capteurs de lumière. Dans un mode de réalisation, chaque ensemble de capteurs ne reçoit qu'un signal lumineux d'origine, c'est-à-dire reçoit de la lumière ne provenant que d'une seule source lumineuse d'origine.

L'interface de commande, le dispositif d'éclairage et le dispositif de vision industrielle comportent de préférence une ou plusieurs des caractéristiques de l'interface de commande, du dispositif d'éclairage et du dispositif de vision industrielle décrits dans PCT/EP2017/074423.

Un exemple non-revendiqué en soi concerne enfin un dispositif de convoyage d'objets comportant :
- une voie de convoyage d'objets, et
- une interface de commande, de préférence un dispositif d'éclairage, de préférence un dispositif de vision industrielle, les sources lumineuses asservies étant adaptées à éclairer une zone d'intérêt comportant au moins une portion de la voie de convoyage d'objets.

Dans un mode de réalisation, le dispositif de convoyage comprend en outre une unité de tri commandée par un module électronique de commande relié à un dispositif de numérisation du dispositif de vision industrielle, pour trier les objets convoyés sur la voie de convoyage en fonction d'images prises par la caméra.

### Définitions

Par « source lumineuse », on entend une source électrique apte à émettre un rayonnement dans le domaine visible, infrarouge ou ultraviolet.

Une « configuration d'éclairage » est un vecteur d'état déterminant les conditions dans lesquelles une pluralité de sources lumineuses émettent un rayonnement. Les valeurs de ce vecteur peuvent en particulier déterminer si une source lumineuse est allumée ou éteinte, l'intensité de la lumière qu'elle émet, le spectre de fréquences de cette lumière, et/ou la séquence d'éclairage, et notamment une fréquence d'émission de flashs. Lorsqu'une configuration d'éclairage est « appliquée », lesdites sources lumineuses émettent de la lumière conformément à cette instruction. Par extension, une configuration d'éclairage désigne également l'éclairage résultant de cette application.

« Comporter » et « comprendre » doivent être interprétés de manière non limitative.

### Brève description des figures

D'autres caractéristiques et avantages de l'invention apparaîtront à la lecture de la description détaillée qui suit, laquelle description fait référence aux dessins ci-annexés parmi lesquels :
- la figure 1 représente schématiquement une interface de commande, en perspective vue de derrière (fig. 1A), en perspective vue de devant (fig. 1B), vue de côté (fig. 1C), et vue de derrière (fig. 1D) ;
- la figure 2 représente un dispositif de vision industrielle mettant en oeuvre l'interface de commande de la figure 1, en positions démontée (fig. 2A) et assemblée (fig. 2B) de la caméra ;
- la figure 3 illuste une application d'un dispositif de vision industrielle selon l'invention ;
- la figure 4 représente un ordinogramme d'un procédé selon l'invention.

Dans la présente description, les éléments identiques ou de fonction identique portent le même signe de référence. À fin de concision de la description, ces éléments ne sont pas décrits en regard de chaque figure.

### Description détaillée

### Dispositif

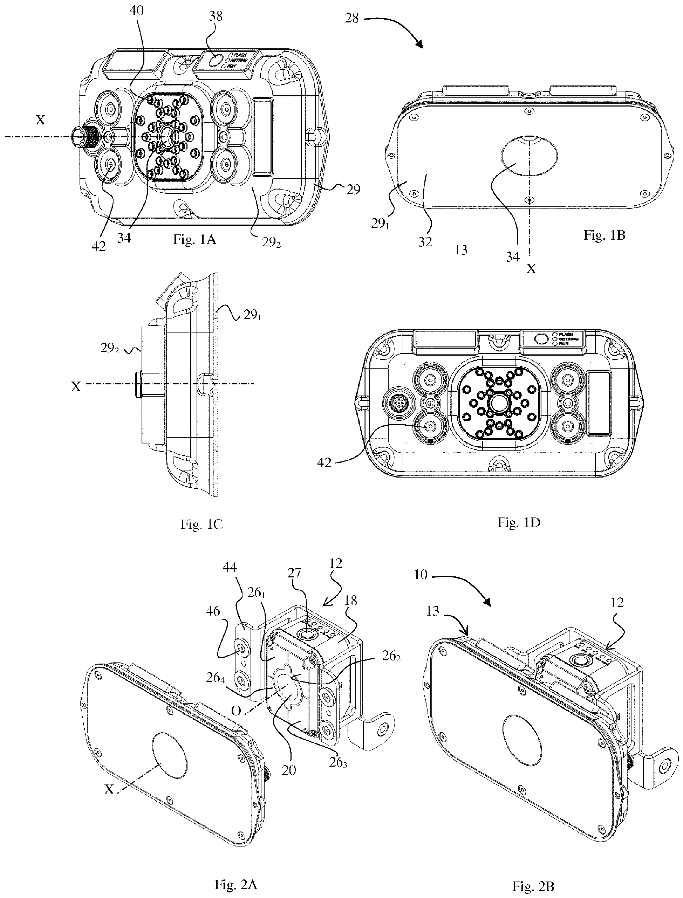

Dans un mode de réalisation préféré, un dispositif de vision industrielle 10 comprend un système de caméra 12 et un dispositif d'éclairage 13 (Fig. 2B).

Le système de caméra 12 comprend classiquement une caméra 18 (Fig. 2A).

La caméra comprend classiquement un objectif 20 composé d'une lentille optique ou d'une pluralité de lentilles optiques, associée(s) à un capteur optique, non représenté, pour capter des images de la zone d'intérêt. Le capteur optique est classiquement connecté à une carte électronique, notamment pour traiter les informations provenant du capteur optique et en déduire une image numérisée de la zone d'intérêt.

Le système de caméra comprend également une pluralité de sources lumineuses d'origine, classiquement plus de 1, plus de 2, plus de 3 ou plus de 7 sources lumineuses d'origine. Les sources lumineuses d'origine sont de préférence intégrées dans la caméra 18. Dans le mode de réalisation représenté, quatre sources lumineuses d'origine 26₁, 26₂, 26₃ et 26₄ sont intégrées dans la caméra 18.

Les sources lumineuses d'origine, classiquement des diodes électroluminescentes, sont de préférence chacune constituées par un flash ou tout autre moyen d'éclairage classiquement intégré dans une caméra industrielle.

Souvent, les sources lumineuses d'origine ne permettent pas un éclairage satisfaisant de la zone d'intérêt, c'est-à-dire un éclairage qui permette au dispositif de vision industrielle d'identifier et, par exemple, de trier les objets présents dans la zone d'intérêt.

De préférence, plusieurs, de préférence plus de 3, plus de 7, plus de 15, de préférence plus de 63 et/ou moins de 1000, moins de 500, moins de 100 configurations d'éclairage d'origine peuvent être adoptées par le système de caméra. Par exemple, avec trois sources lumineuses d'origine, il est possible de définir les configurations suivantes (1,0,0), (0,1,0), (0,0,1), (1,1,0), (1,0,1), (0,1,1) et (1,1,1), « 1 » et « 0 » signifiant que la source lumineuse d'origine est allumée et éteinte, respectivement, les trois chiffres désignant les trois sources lumineuses d'origine.

De préférence, le système de caméra comporte une interface de caméra 27, par exemple un écran tactile et/ou des boutons, un processeur et une mémoire informatique configurés pour autoriser l'enregistrement d'une et de préférence plusieurs configurations d'éclairage d'origine et la sélection d'une configuration d'éclairage d'origine enregistrée. Des moyens conventionnels peuvent être mis en oeuvre à cet effet.

Le dispositif d'éclairage comporte une interface de commande 28 et une pluralité de sources lumineuses asservies 32 (Fig. 1).

Les sources lumineuses asservies, différentes des sources lumineuses d'origine, sont asservies aux sources lumineuses d'origine, la lumière qu'elles émettent dépendant directement et de préférence exclusivement, de la lumière émise par les sources lumineuses d'origine.

Dans un mode de réalisation préféré, l'interface de commande 28 comporte un boîtier 29 présentant une face avant 29₁ et une face arrière 29₂. Une ouverture 34 d'axe X, de préférence circulaire, de préférence de rayon supérieur à 12 mm et/ou inférieur à 30 mm, traverse le boîtier entre les faces avant et arrière.

L'ensemble des sources lumineuses asservies 32, de préférence des DEL ou des groupes de DEL fonctionnant de manière synchrone, est fixé sur la face avant. L'ensemble de sources lumineuses asservies 32 peut être monté de manière amovible sur l'interface de commande. De préférence, il est intégré à l'interface de commande.

L'ensemble de sources lumineuses asservies peut comporter, par exemple, quatre groupes de DEL multicolores intégrées pouvant s'allumer de couleur rouge, verte ou bleue, ce qui permet de réaliser au moins 2^3×2^4=8×16=128 configurations d'éclairage asservies différentes. L'intensité de chaque groupe de LED peut être réglable, ce qui permet de multiplier les configurations d'éclairage asservies. Le choix des sources lumineuses asservies allumées et de l'intensité et du spectre du rayonnement qu'elles émettent permet ainsi de réaliser des éclairages très complexes.

Dans un mode de réalisation, des sources lumineuses asservies peuvent également émettre dans des fréquences non visibles, par exemple dans d'infra-rouge ou l'ultraviolet.

De préférence, plusieurs, de préférence plus de 2, plus de 3, plus de 7, de préférence plus de 15 configurations d'éclairage asservies peuvent être adoptées par l'ensemble de sources lumineuses asservies. Dans chaque configuration d'éclairage asservie, le fonctionnement d'une source lumineuse asservie est de préférence déterminé par un triplet (état allumé ou éteint, intensité du rayonnement, spectre lumineux du rayonnement émis). L'ensemble de ces triplets, déterminés pour l'ensemble des sources lumineuses asservies, peut ainsi définir une configuration d'éclairage asservie.

De préférence, les configurations d'éclairage asservies sont enregistrées dans une mémoire informatique de l'interface de commande. De préférence encore, l'interface de commande comporte une interface de programmation 38, par exemple un écran tactile et/ou un ou plusieurs boutons, un processeur et une mémoire informatique configurés pour autoriser l'enregistrement d'une et de préférence plusieurs configurations d'éclairage asservies et la sélection d'une configuration d'éclairage asservie enregistrée. Des moyens conventionnels peuvent être mis en oeuvre à cet effet.

De préférence, l'interface de programmation est configurée de manière que la sélection d'une configuration d'éclairage asservie provoque l'application de cette configuration. De préférence, l'interface de programmation est configurée pour que l'opérateur puisse commander successivement l'application des différentes configurations d'éclairage asservies, par exemple par plusieurs appuis successifs sur un bouton de l'interface de programmation 38.

De préférence, dans une configuration d'éclairage asservie, de préférence dans chaque configuration d'éclairage asservie, au moins deux sources lumineuses asservies 32 sont configurées pour émettre des spectres lumineux différents, de préférence des couleurs différentes.

De préférence, aucune source lumineuse asservie n'éclaire directement le système de caméra.

La face arrière 29₂ porte un ensemble de capteurs de lumière 40 destinés à recevoir des signaux lumineux d'origine émis par les sources lumineuses d'origine de la caméra dans une position assemblée de la caméra, comme représenté sur la figure 2B. En fonction de la caméra, chaque capteur de lumière 40 peut recevoir 0, 1 ou plusieurs signaux lumineux d'origine.

L'agencement des capteurs de lumière 40 permet l'identification, par l'interface de commande, d'au moins une partie, de préférence de toutes les configurations d'éclairage d'origine réalisables avec les sources lumineuses d'origine.

Le nombre et l'agencement des capteurs de lumière 40 sont de préférence déterminés de manière que l'interface de commande puisse servir à différents types de caméras industrielles.

Les capteurs de lumière sont de préférence configurés pour ne détecter qu'un spectre lumineux d'une largeur inférieure à 100 nm, de préférence inférieure à 50 nm, de préférence sensiblement centré (+/- 20 nm) sur une longueur d'onde discrète choisie parmi 470 nm, 525 nm, 635 nm, 660 nm, 850 nm, et 880 nm.

La face arrière 29₂ comporte également des attaches d'interface 42, de préférence désactivables manuellement, de préférence magnétiques, permettant la fixation de la caméra dans une position assemblée prédéterminée.

De préférence, la position assemblée est déterminée de manière qu'au moins une partie, de préférence toutes les sources lumineuses d'origine fassent face à un ou plusieurs capteurs de lumière respectifs et, de préférence soient à moins de 3 cm, de préférence moins de 2 cm, de préférence moins de 1 cm, de préférence accolés au(x) dit(s) capteurs de lumière respectif(s), de manière à limiter la perte de lumière et les interactions lumineuses avec l'environnement.

De préférence, chaque capteur de lumière est disposé de manière que la lumière qu'il reçoit provienne, pour plus de 50%, de préférence plus de 70%, de préférence plus de 90%, de préférence sensiblement 100% de leur intensité, d'une ou plusieurs sources lumineuses d'origine qui lui fait (font) face.

De préférence, chaque source lumineuse d'origine éclaire exclusivement vers un ou plusieurs capteurs de lumière qui lui sont propres, c'est-à-dire qui ne reçoivent sensiblement pas de lumière des autres sources lumineuses d'origine.

De préférence, aucune source lumineuse d'origine n'éclaire la zone d'intérêt.

De préférence, l'asservissement des sources lumineuses asservies ne dépend sensiblement que de la lumière émise par la ou les sources lumineuses d'origine. En particulier, il ne dépend sensiblement pas de la lumière émise par la ou les sources lumineuses asservies.

L'asservissement des sources lumineuses asservies conduit à déterminer leurs conditions de fonctionnement en fonction de l'éclairage émis par les sources lumineuses d'origine, de préférence exclusivement en fonction de l'éclairage émis par les sources lumineuses d'origine.

Le boîtier 29 contient une unité électronique 36 connectée aux capteurs de lumière 40 et aux sources lumineuses asservies 32. L'unité électronique de traitement 36 traite les signaux émis en sortie par les capteurs de lumière 40 et les traduit en signaux de commande pour les sources lumineuses asservies 32.

L'unité électronique de traitement comporte des moyens de calcul, de mémoire et de communication classiques. Elle comporte de préférence un circuit intégré, notamment un circuit logique programmable, de préférence un réseau de portes programmables, une mémoire informatique et des moyens de communication électronique avec les capteurs de lumière et les sources lumineuses asservies, ainsi qu'avec l'interface de programmation 38.

De préférence, les sources lumineuses asservies sont commandées par l'unité électronique de traitement pour émettre de manière intermittente, de préférence pour émettre des flashs d'une durée inférieure à 10 ms, de préférence inférieure à 3 ms et préférentiellement inférieure à 200 µs et/ou un spectre lumineux d'une largeur inférieure à 100 nm, de préférence inférieure à 50 nm. Avantageusement, l'éclairage intermittent évite de créer du flou sur les images lors du mouvement des pièces.

De préférence, l'unité électronique de traitement est configurée pour la commande indépendante de plus de 3, plus de 7, plus de 15, plus de 127 sources lumineuses asservies.

De préférence, un signal de commande détermine une intensité lumineuse et/ou une spectre de rayonnement (couleur, UV...) pour la lumière à produire par la source lumineuse asservie qui le reçoit.

L'interface de programmation 38 est configurée de manière à permettre à un opérateur d'enregistrer dans l'interface de commande une relation informatique entre des configurations d'éclairage d'orgine et asservie qui sont en cours d'application.

### Fonctionnement

Le fonctionnement du dispositif découle directement de ce qui précède.

Préalablement à la mise en oeuvre opérationnelle, l'opérateur ou le fabricant de l'interface peut avoir programmé et enregistré une ou de préférence plusieurs configurations d'éclairage asservies dans l'interface de commande, par exemple une configuration pour la détection de tomates, une configuration pour la détection de carottes et une configuration pour la détection de radis. De préférence, chaque configuration est associée à une étiquette, par exemple « tomates », « carottes » et « radis », et cette étiquette est affichée par l'interface de programmation lorsque la configuration est appliquée. Ces étiquettes facilitent la sélection d'une configuration d'éclairage asservie par l'opérateur.

Préalablement à la mise en oeuvre opérationnelle, l'opérateur ou le fabricant de la caméra peut avoir programmé une ou de préférence plusieurs configurations d'éclairage d'origine dans la caméra, par exemple une configuration avec toutes les sources lumineuses d'origine allumées, une configuration avec les seules sources lumineuses d'origine 26₁ et 26₂ allumées, une configuration avec les seules sources lumineuses d'origine 26₁ et 26₃ allumées, une configuration avec les seules sources lumineuses d'origine 26₂ et 26₃ allumées, une configuration avec la seule source lumineuse d'origine 26₁ allumée, une configuration avec la seule source lumineuse d'origine 26₂ allumée, et une configuration avec la seule source lumineuse d'origine 26₃ allumée.

De préférence, chaque configuration est associée à une étiquette, par exemple « 1 », « 2 », « 3 », « 4 », « 5 », « 6 », et « 7 » pour les configurations ci-dessus, et cette étiquette est affichée sur l'interface de caméra 27 lorsque la configuration est appliquée. Ces étiquettes facilitent la sélection d'une configuration d'éclairage d'origine par l'opérateur.

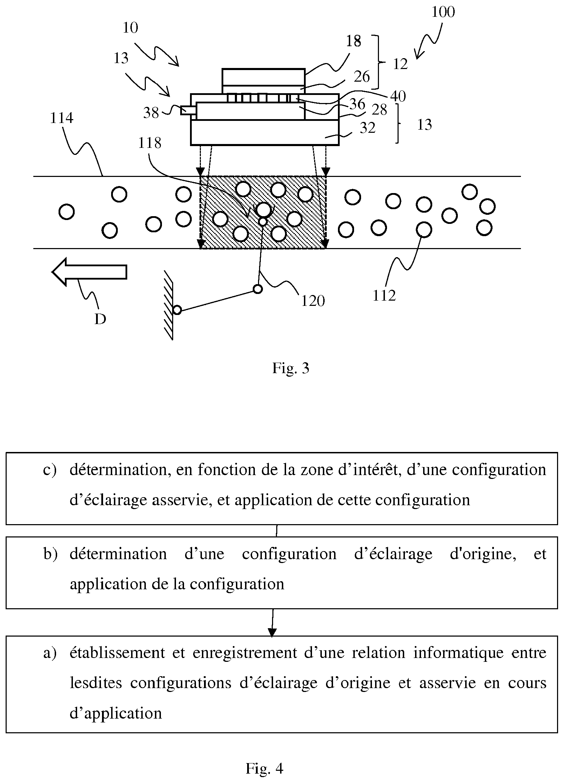

Le paramétrage de l'interface de commande est effectué selon les étapes a) à c), en temps réel (figure 4) :
L'opérateur fixe d'abord la caméra sur le support de fixation 44, puis le support de fixation 44 sur l'interface de commande au moyen des attaches 42 et 46. L'axe optique O de la caméra est alors sensiblement aligné avec l'axe X de l'ouverture 34 et les sources lumineuses d'origine 26₁, 26₂, 26₃ et 26₄ de la caméra sont accolés à des capteurs de lumières 40 respectifs. Les capteurs concernés dépendent du type de caméra. Les autres capteurs font face à la caméra et sont sensiblement obturés par cette dernière.

L'opérateur positionne ensuite l'ensemble caméra-interface de commande de manière que la caméra observe la zone d'intérêt à travers l'ouverture de l'interface de commande et que les sources lumineuses asservies 32 soient orientées vers la zone d'intérêt.

**A l'étape a),** l'opérateur teste ensuite différentes configurations d'éclairage asservies. De préférence, des configurations d'éclairage asservies sont enregistrées dans l'interface de commande et peuvent être sélectionnées. Dans un mode de réalisation, l'interface de commande permet à l'opérateur de personnaliser une configuration d'éclairage asservie, de préférence de déterminer, pour chacune d'une pluralité de sources lumineuses asservies, une intensité et/ou un spectre de rayonnement, par exemple une couleur. Dans un mode de réalisation, une configuration d'éclairage asservie est également caractérisée par une séquence d'éclairage, par exemple par une fréquence d'émission de la lumière par les sources lumineuses asservies.

Par exemple, dans une première configuration d'éclairage asservie, 20% des sources lumineuses asservies émettent une lumière rouge, avec une intensité de 30%, 70% des sources lumineuses asservies émettent une lumière bleue, avec une intensité de 50%, et 10% des sources lumineuses asservies émettent une lumière jaune bleue, avec une intensité de 80%.

L'opérateur applique et examine l'effet de cette configuration d'éclairage asservie sur la zone d'intérêt. Par exemple, il mesure l'efficacité de la reconnaissance, par le dispositif de vision industrielle, des objets posés sur un convoyeur.

Ensuite, l'opérateur sélectionne et applique une deuxième configuration d'éclairage asservie, ce qui active les sources lumineuses asservies en conséquence. Par exemple, dans la deuxième configuration d'éclairage asservie, 100% des sources lumineuses asservies émettent une lumière rouge, avec une intensité de 50%. Il examine l'effet de cette deuxième configuration d'éclairage asservie sur la zone d'intérêt et le compare à l'effet de l'éclairage obtenu avec la première configuration d'éclairage asservie.

Il renouvelle ces opérations de test jusqu'à trouver et sélectionner une configuration d'éclairage asservie optimale.

Alternativement, l'opérateur peut sélectionner la configuration d'éclairage asservie optimale dans une base de configurations d'éclairage asservies préalablement enregistrées dans l'interface de commande, comme décrit ci-dessus.

Dans un mode de réalisation, il maintient les sources lumineuses asservies dans la configuration d'éclairage asservie optimale qu'il a sélectionnée. Il n'a alors pas besoin de l'enregistrer dans l'interface de commande.

Il peut alternativement enregistrer dans l'interface de commande, au moyen de l'interface de programmation, la configuration d'éclairage asservie optimale qu'il a sélectionnée. Il n'a alors pas besoin de maintenir actives les sources lumineuses asservies, dans la configuration d'éclairage asservie optimale.

**A l'étape b),** antérieure ou postérieure à l'étape a), l'opérateur sélectionne et applique une configuration d'éclairage d'origine, de préférence parmi un ensemble de configurations d'éclairage d'origine enregistrées dans une mémoire de la caméra. L'opérateur peut choisir une configuration d'éclairage d'origine quelconque. De préférence, il choisit une configuration d'éclairage d'origine disponible, c'est-à-dire qui n'a pas été encore associée à une configuration d'éclairage asservie. Dans un mode de réalisation, l'interface de caméra informe l'opérateur sur la disponibilité d'une configuration d'éclairage d'origine. Par exemple, il choisit une configuration dans laquelle les seules sources lumineuses d'origine 26₁ et 26₂ sont allumées.

**A l'étape c),** l'opérateur établit alors une relation informatique entre les configurations d'éclairage asservie optimale et d'origine sélectionnées, par exemple par un appui sur un bouton de l'interface de programmation de l'interface de commande. L'unité de traitement enregistre alors cette relation entre la configuration d'éclairage asservie optimale qui a été enregistrée ou qui est active d'une part, et la configuration d'éclairage d'origine qui est active d'autre part.

Dès lors, à chaque fois que la configuration d'éclairage d'origine sélectionnée sera appliquée par la caméra, l'interface de commande commandera la configuration d'éclairage asservie optimale.

De préférence, quand l'opérateur sélectionne une configuration d'éclairage d'origine, l'interface de programation l'informe si cette configuration d'éclairage d'origine est déjà en relation informatique avec une configuration d'éclairage asservie, et, le cas échéant, lui indique les objets de la zone d'intérêt pour lesquels cette configuration d'éclairage asservie est optimale. La sélection d'une configuration d'éclairage d'origine en est facilitée.

Comme cela apparaît clairement à présent, le paramétrage du dispositif de vision industrielle *in situ* selon l'invention est particulièrement avantageux car il permet de s'adapter à l'environnement spécifique dans lequel la caméra est utilisé, et en particulier de tenir compte de l'environnement lumineux ambiant.

Un simple changement de configuration d'éclairage d'origine permet en particulier d'obtenir un changement complexe de la configuration d'éclairage asservie, et donc de s'adapter très rapidement, sans programmation complexe, à une évolution de la zone d'intérêt. Par exemple, en cas de modification de l'objet convoyé (tomates, carottes, radis), l'opérateur peut adapter l'éclairage du convoyeur de manière précise et rapide, sans formation particulière, en sélectionnant la configuration d'éclairage d'origine correspondante sur la caméra.

Bien entendu, l'ordre des opérations pourrait être différent. En particulier, la sélection de la configuration d'éclairage d'origine peut être antérieure à celle de la configuration d'éclairage asservie.

### Exemple d'application

La figure 3 illustre schématiquement un dispositif 100 de convoyage industriel d'objets 112. Ce dispositif de convoyage 100 comprend une voie de convoyage 114 convoyant les objets 112, par exemple des tomates, dans la direction D. La voie de convoyage 114 est par exemple un tapis roulant. Le dispositif de convoyage 100 comprend un dispositif de vision industrielle 10 selon l'invention, dont le dispositif d'éclairage 13 éclaire une zone d'intérêt 118 formée par un tronçon de la voie de convoyage 114, traversée par les objets 112.

La caméra 18 du dispositif de vision industrielle est connectée à une unité de calcul non représenté, souvent un micro-ordinateur ou un système avec processeur embarqué (comme un DSP), permettant, à l'aide d'un logiciel de traitement d'images, de déterminer les objets présents sur l'image prise et ne respectant pas un critère de tri.

Le dispositif de convoyage 100 comprend encore une unité de tri 120 pour retirer de la voie de convoyage 114 les objets 112 sélectionnés, par exemple dont le contrôle par le dispositif de vision industrielle a révélé un défaut. En l'espèce, cette unité de tri est constituée d'un bras mobile 120 pour retirer des objets 112 de la voie de convoyage 114.

Des signaux lumineux d'origine sont émis par les sources lumineuses d'origine 26 du système de caméra 12, par exemple selon la configuration d'éclairage d'origine « 2 ». Ces signaux lumineux d'origine sont captés par les capteurs de lumière 40 de l'interface de commande 28. Les signaux émis par les capteurs de lumière en réponse à la réception de ces signaux lumineux d'origine sont traités pour en déduire des signaux de commande d'une ou plusieurs sources lumineuses asservies 32. Cette commande s'effectue suivant la relation informatique établie avec les sources lumineuses d'origine 26, comme décrit ci-dessus, ce qui permet d'appliquer une configuration d'éclairage asservie optimale pour le tri des tomates.

Il s'ensuit une prise de vue de la zone d'intérêt 118 par le système de caméra 12. L'image acquise est alors interprétée, de manière connue en soi, pour en déduire des informations sur les objets convoyés traversant la zone d'intérêt 118. Le tri des objets ne répondant pas au critère de tri peut alors être réalisé.

Si les objets 112 changent et que les tomates sont remplacées par des carottes, il suffit à l'opérateur de modifier la configuration d'éclairage d'origine, en sélectionant la configuration d'éclairage d'origine « 3 », pour obtenir instantanément, sans programmation, un éclairage optimal pour le tri des carottes, pour la caméra utilisée et dans l'environnement spécifique où elle est utilisée.

Si aucune configuration d'éclairage asservie enregistrée dans l'interface de commande ne convient, par exemple parce que les objet à trier sont des endives, il modifie « à la main » les paramètres des sources lumineuses asservies jusqu'à trouver une configuration d'éclairage asservie optimale, puis l'associe à une configuration d'éclairage d'origine, comme décrit précédemment.

Comme cela apparaît clairement à présent, l'invention fournit une solution simple et flexible permettant une adaptation optimale d'un éclairage quel que soit l'environnement d'utilisation.

En particulier, il existe une indépendance entre la nature de l'éclairage des sources lumineuses d'origine et celle de l'éclairage des sources lumineuses asservies, de sorte que sources lumineuses d'origine peuvent être très simples, par exemple de simples flash, et conduire à la génération d'un éclairage très complexes, parfaitement adapté aux objets éclairés.

L'invention n'est pas limitée aux seuls exemples qui viennent d'être décrits et est susceptible de nombreuses variantes accessibles à l'homme du métier. Notamment, les applications ne sont pas limitées à un dispositif de convoyage industriel.

## Revendications

1. Procédé de paramétrage d'un dispositif de vision industrielle, ledit dispositif de vision industrielle comportant :
- un système de caméra (12) comportant une caméra (18) et des première et deuxième sources lumineuses d'origine (26₁, 26₂, 26₃, 26₄) configurées pour, dans une configuration d'éclairage d'origine, émettre des premier et deuxième signaux lumineux d'origine respectivement ;
- un dispositif d'éclairage (13) comportant :
- une interface de commande (28) comportant :
- des premier et deuxième capteurs de lumière (40) agencés pour capter lesdits premier et deuxième signaux lumineux d'origine, respectivement, et émettre des premier et deuxième signaux de capteur, respectivement, en réponse à la capture desdits premier et deuxième signaux lumineux d'origine, respectivement ;
- une unité électronique (36) de traitement desdits premier et deuxième signaux de capteur configurée de manière à émettre, en conséquence dudit traitement, une pluralité de signaux de commande à des sorties respectives de l'unité électronique de traitement ;
procédé dans lequel, dans une position assemblée dans laquelle la caméra est fixée sur l'interface de commande, les sources lumineuses d'origine font face à un ou plusieurs capteurs de lumière respectifs et sont à moins de 3 cm desdits capteurs de lumière respectifs,
- une pluralité de sources lumineuses asservies (32), chacune connectée à une sortie respective de l'unité électronique de traitement de manière à être commandée avec le signal de commande délivré à ladite sortie pour éclairer une zone d'intérêt (118) ;
ledit procédé comportant les étapes successives suivantes :
a) sélection, en fonction de la zone d'intérêt, d'une configuration d'éclairage pour les sources lumineuses asservies, dite « configuration d'éclairage asservie », et enregistrement de la configuration d'éclairage asservie dans l'interface de commande et/ou application de la configuration d'éclairage asservie ;
b) indépendamment de l'étape a), sélection d'une configuration d'éclairage pour les sources lumineuses d'origine, ou « configuration d'éclairage d'origine » , et application de la configuration d'éclairage d'origine ;
c) établissement d'une relation informatique entre lesdites configurations d'éclairage d'origine et asservie et enregistrement de ladite relation informatique dans l'interface de commande de manière que l'unité électronique commande un éclairage de la zone d'intérêt selon la configuration d'éclairage asservie en réponse à la réception, par lesdits capteurs, de signaux lumineux d'origine selon la configuration d'éclairage d'origine, procédé **caractérisé en ce que**, à l'étape a), on teste une pluralité de configurations d'éclairage asservies, de manière à trouver et sélectionner une configuration d'éclairage asservie optimale pour l'efficacité d'une reconnaissance, par le dispositif de vision industrielle, d'objets disposés dans la zone d'intérêt.

2. Procédé selon la revendication 1, dans lequel à l'étape c), on enregistre ladite relation informatique entre les configurations d'éclairage d'origine et asservie par action sur un organe de programmation de l'interface de commande.

3. Procédé selon l'une quelconque des revendications précédentes, dans lequel chaque capteur de lumière est disposé de manière que la lumière qu'il reçoit provienne, pour plus de 50 % de son intensité, d'une ou plusieurs sources lumineuses d'origine qui lui font face.

4. Procédé selon l'une quelconque des revendications précédentes, dans lequel on maintient actives les sources lumineuses asservies, selon la configuration d'éclairage asservie sélectionnée à l'étape a), pendant l'application de la configuration d'éclairage d'origine à l'étape b) et/ou jusqu'à avoir établi ladite relation informatique à l'étape c).

5. Procédé selon l'une quelconque des revendications précédentes, dans lequel :
- à l'étape a), on sélectionne la configuration d'éclairage asservie dans une base de configurations d'éclairage asservies stockée dans l'interface de commande ; et/ou
- à l'étape b), on sélectionne la configuration d'éclairage d'origine dans une base de configurations d'éclairage d'origine stockée dans la caméra.

6. Procédé selon l'une quelconque des revendications précédentes, dans lequel, les sources lumineuses d'origine (26₁, 26₂, 26₃, 26₄) sont réglables par un opérateur de manière indépendante et, à l'étape a), pour sélectionner la configuration d'éclairage asservie, un opérateur règle au moins une source lumineuse d'origine indépendamment des autres sources lumineuses d'origine.

7. Procédé selon l'une quelconque des revendications précédentes, dans lequel lesdites sources lumineuses d'origine (26₁, 26₂, 26₃, 26₄) sont intégrées dans la caméra et/ou les sources lumineuses asservies (32) sont intégrées à l'interface de commande.

8. Procédé selon l'une quelconque des revendications précédentes, dans lequel, dans la configuration d'éclairage asservie, au moins deux sources lumineuses asservies (32) sont configurées pour émettre des spectres lumineux différents.

9. Procédé selon l'une quelconque des revendications précédentes, dans lequel la caméra est fixée, de préférence magnétiquement, sur l'interface de commande (28) dans une position prédéterminée.

10. Procédé selon l'une quelconque des revendications précédentes, dans lequel le cycle des étapes a) à c) est renouvelé pour établir plusieurs dites relations informatiques adaptées à la reconnaissance, par le dispositif de vision industrielle, de plusieurs objets (112) différents.

11. Procédé selon l'une quelconque des revendications précédentes, dans lequel la ou les sources lumineuses asservies sont configurées pour émettre des flashs d'une durée inférieure à 10 ms et/ou un spectre lumineux d'une largeur inférieure à 100 nm, et/ou dans lequel au moins une partie des sources lumineuses asservies (32) sont configurées pour émettre dans un domaine de fréquences non visibles.

12. Procédé selon l'une quelconque des revendications précédentes, dans lequel l'interface de commande est traversée par une ouverture (34) et l'axe optique (O) de la caméra est sensiblement aligné avec l'axe (X) de l'ouverture (34), les sources lumineuses asservies étant disposées du côté de l'interface de commande opposé à la caméra.

## Patentansprüche

1. Verfahren zur Parametrisierung eines Maschinensichtgeräts, wobei das Maschinensichtgerät Folgendes umfasst:
- ein Kamerasystem (12), das eine Kamera (18) und eine erste und eine zweite Primärlichtquelle (26₁, 26₂, 26₃, 26₄), die dazu konfiguriert sind, in einer Primärbeleuchtungskonfiguration ein erstes bzw. ein zweites Primärlichtsignal auszugeben, beinhaltet;
eine Beleuchtungsvorrichtung (13), die Folgendes umfasst:
- eine Steuerschnittstelle (28), die Folgendes umfasst:
- einen ersten und einen zweiten Lichtsensor (40), die dazu eingerichtet sind, das erste bzw. das zweite Primärlichtsignal zu erfassen und als Reaktion auf das Erfassen des ersten bzw. des zweiten Primärlichtsignals ein erstes bzw. ein zweites Sensorsignal auszugeben;
- eine elektronische Einheit (36) zur Verarbeitung des ersten und des zweiten Sensorsignals, die so konfiguriert ist, dass sie als Ergebnis der Verarbeitung eine Vielzahl von Steuersignalen an jeweiligen Ausgängen der elektronischen Verarbeitungseinheit ausgibt;
wobei bei dem Verfahren in einer montierten Position, in der die Kamera an der Steuerschnittstelle befestigt ist, die Primärlichtquellen einem oder mehreren jeweiligen Lichtsensoren gegenüberliegen und weniger als 3 cm von den jeweiligen Lichtsensoren entfernt sind,
- eine Vielzahl von nachgeführten Lichtquellen (32), von denen jede mit einem jeweiligen Ausgang der elektronischen Verarbeitungseinheit verbunden ist, sodass sie mit dem an dem Ausgang bereitgestellten Steuersignal gesteuert wird, um ein Gebiet von Interesse (118) zu beleuchten;
wobei das Verfahren die folgenden aufeinanderfolgenden Schritte umfasst:
a) Auswählen, in Abhängigkeit von dem Gebiet von Interesse, einer Beleuchtungskonfiguration für die nachgeführten Lichtquellen, als "Nachführungsbeleuchtungskonfiguration" bezeichnet, und Aufzeichnen der Nachführungsbeleuchtungskonfiguration in der Steuerschnittstelle und/oder Anwenden der Nachführungsbeleuchtungskonfiguration;
b) unabhängig von Schritt a), Auswählen einer Beleuchtungskonfiguration für die Primärlichtquellen bzw. einer "Primärbeleuchtungskonfiguration" und Anwenden der Primärbeleuchtungskonfiguration;
c) Erstellen einer digitalen Beziehung zwischen der Primär- und der Nachführungsbeleuchtungskonfiguration und Aufzeichnen der digitalen Beziehung in der Steuerschnittstelle, sodass die elektronische Einheit als Reaktion auf das Empfangen, durch die Sensoren, von Primärlichtsignalen gemäß der Primärbeleuchtungskonfiguration eine Beleuchtung des Gebiets von Interesse gemäß der Nachführungsbeleuchtungskonfiguration steuert,
wobei das Verfahren **dadurch gekennzeichnet ist, dass** in Schritt a) eine Vielzahl von Nachführungsbeleuchtungskonfigurationen getestet werden, um eine Nachführungsbeleuchtungskonfiguration zu finden und auszuwählen, die für die Wirksamkeit einer Erkennung von Objekten, die in dem Gebiet von Interesse angeordnet sind, durch das Maschinensichtgerät optimal ist.

2. Verfahren nach Anspruch 1, wobei in Schritt c) die digitale Beziehung zwischen der Primär- und der Nachführungsbeleuchtungskonfiguration durch Betätigung eines Programmierorgans der Steuerschnittstelle aufgezeichnet wird.

3. Verfahren nach einem beliebigen der vorhergehenden Ansprüche, wobei jeder Lichtsensor so angeordnet ist, dass das Licht, das er empfängt, zu mehr als 50 % seiner Stärke von einer oder mehreren Primärlichtquellen stammt, die ihm gegenüberliegen.

4. Verfahren nach einem beliebigen der vorhergehenden Ansprüche, wobei die nachgeführten Lichtquellen während des Anwendens der Primärbeleuchtungskonfiguration in Schritt b) und/oder bis zur Erstellung der digitalen Beziehung in Schritt c) gemäß der in Schritt a) ausgewählten Nachführungsbeleuchtungskonfiguration in aktivem Zustand gehalten werden.

5. Verfahren nach einem beliebigen der vorhergehenden Ansprüche, wobei:
- in Schritt a) die Nachführungsbeleuchtungskonfiguration aus einer Datenbank mit Nachführungsbeleuchtungskonfigurationen, die in der Steuerschnittstelle gespeichert ist, ausgewählt wird; und/oder
- in Schritt b) die Primärbeleuchtungskonfiguration aus einer Datenbank mit Primärbeleuchtungskonfigurationen, die in der Kamera gespeichert ist, ausgewählt wird.

6. Verfahren nach einem beliebigen der vorhergehenden Ansprüche, wobei die Primärlichtquellen (26₁, 26₂, 26₃, 26₄) durch einen Bediener unabhängig eingestellt werden können und in Schritt a), um die Nachführungsbeleuchtungskonfiguration auszuwählen, ein Bediener mindestens eine Primärlichtquelle unabhängig von den anderen Primärlichtquellen einstellt.

7. Verfahren nach einem beliebigen der vorhergehenden Ansprüche, wobei die Primärlichtquellen (26₁, 26₂, 26₃, 26₄) in die Kamera integriert sind und/oder die nachgeführten Lichtquellen (32) in die Steuerschnittstelle integriert sind.

8. Verfahren nach einem beliebigen der vorhergehenden Ansprüche, wobei in der Nachführungsbeleuchtungskonfiguration mindestens zwei nachgeführte Lichtquellen (32) dazu konfiguriert sind, unterschiedliche Lichtspektren zu emittieren.

9. Verfahren nach einem beliebigen der vorhergehenden Ansprüche, wobei die Kamera, vorzugsweise magnetisch, in einer vorbestimmten Position an der Steuerschnittstelle (28) befestigt wird.

10. Verfahren nach einem beliebigen der vorhergehenden Ansprüche, wobei der Zyklus der Schritte a) bis c) wiederholt wird, um mehrere sogenannte digitale Beziehungen zu erstellen, die an die Erkennung von mehreren unterschiedlichen Objekten (112) durch das Maschinensichtgerät angepasst sind.

11. Verfahren nach einem beliebigen der vorhergehenden Ansprüche, wobei die eine oder die mehreren nachgeführten Lichtquellen dazu konfiguriert sind, Blitze mit einer Dauer von weniger als 10 ms und/oder ein Lichtspektrum mit einer Breite von weniger als 100 nm zu emittieren und/oder wobei mindestens ein Teil der nachgeführten Lichtquellen (32) dazu konfiguriert ist, in einem Bereich nicht sichtbarer Frequenzen zu emittieren.

12. Verfahren nach einem beliebigen der vorhergehenden Ansprüche, wobei durch die Steuerschnittstelle eine Öffnung (34) verläuft und die optische Achse (O) der Kamera im Wesentlichen nach der Achse (X) der Öffnung (34) ausgerichtet ist, wobei die nachgeführten Lichtquellen auf der Seite der Steuerschnittstelle angeordnet sind, die zu der Kamera entgegengesetzt ist.

## Claims

1. Method for parameterizing a machine-vision device, said machine-vision device comprising:
- a camera system (12) comprising a camera (18) and first and second original light sources (26₁, 26₂, 26₃, 26₄) configured to, in an original lighting configuration, emit first and second original light signals, respectively;
- a lighting device (13) comprising:
- a control interface (28) comprising:
- first and second light sensors (40) arranged to capture said first and second original light signals, respectively, and output first and second sensor signals, respectively, in response to capture of said first and second original light signals, respectively;
- an electronic unit (36) for processing said first and second sensor signals, configured to output, as a result of said processing, a plurality of control signals to respective outputs of the electronic processing unit; in which method, in an assembled position in which the camera is fastened to the control interface, the original light sources face one or more respective light sensors and are less than 3 cm from said respective light sensors,
- a plurality of automatically controlled light sources (32), each connected to one respective output of the electronic processing unit so as to be controlled with the control signal delivered to said output, with a view to illuminating a region of interest (118);
said method comprising the following successive steps:
a) selecting, depending on the region of interest, a lighting configuration for the automatically controlled light sources, called the "automatically controlled lighting configuration", and recording the automatically controlled lighting configuration in the control interface and/or applying the automatically controlled lighting configuration;
b) independently of step a), selecting a lighting configuration for the original light sources, or "original lighting configuration", and applying the original lighting configuration;
c) establishing a computational relationship between said original and automatically controlled lighting configurations and recording said computational relationship in the control interface such that the electronic unit commands illumination of the region of interest in the automatically controlled lighting configuration in response to receipt, by said sensors, of original light signals in the original lighting configuration,
the method being **characterized in that**, in step a), a plurality of automatically controlled lighting configurations are tested so as to find and select an automatically controlled lighting configuration that is optimal in respect of effectiveness of recognition, by the machine-vision device, of objects placed in the region of interest.

2. Method according to Claim 1, wherein, in step c), said computational relationship between the original and automatically controlled lighting configurations is recorded by action on a programming member of the control interface.

3. Method according to any one of the preceding claims, wherein each light sensor is placed such that more than 50% of the intensity of the light that it receives originates from one or more original light sources facing it.

4. Method according to any one of the preceding claims, wherein the automatically controlled light sources are kept active, in the automatically controlled lighting configuration selected in step a), during application of the original lighting configuration in step b) and/or until said computational relationship has been established in step c).

5. Method according to any one of the preceding claims, wherein:
- in step a), the automatically controlled lighting configuration is selected from a database of automatically controlled lighting configurations stored in the control interface; and/or
- in step b), the original lighting configuration is selected from a database of original lighting configurations stored in the camera.

6. Method according to any one of the preceding claims, wherein the original light sources (26₁, 26₂, 26₃, 26₄) are independently adjustable by an operator and, in step a), to select the automatically controlled lighting configuration, an operator adjusts at least one original light source independently of the other original light sources.

7. Method according to any one of the preceding claims, wherein said original light sources (26₁, 26₂, 26₃, 26₄) are integrated into the camera and/or the automatically controlled light sources (32) are integrated into the control interface.

8. Method according to any one of the preceding claims, wherein, in the automatically controlled lighting configuration, at least two automatically controlled light sources (32) are configured to emit different light spectra.

9. Method according to any one of the preceding claims, wherein the camera is fastened, preferably magnetically, to the control interface (28) in a predetermined position.

10. Method according to any one of the preceding claims, wherein the cycle of steps a) to c) is repeated to establish a plurality of said computational relationships suitable for recognition, by the machine-vision device, of a plurality of different objects (112).

11. Method according to any one of the preceding claims, wherein the one or more automatically controlled light sources are configured to emit flashes of duration less than 10 ms and/or a light spectrum of width less than 100 nm, and/or wherein at least some of the automatically controlled light sources (32) are configured to emit in a non-visible frequency range.

12. Method according to any one of the preceding claims, wherein the control interface is traversed by an aperture (34) and the optical axis (O) of the camera is substantially aligned with the axis (X) of the aperture (34), the automatically controlled light sources being placed on the opposite side of the control interface to the camera.
